(19) Europäisches Patentamt / European Patent Office / Office européen des brevets

(11) **EP 3 995 791 B1**

(12) **EUROPÄISCHE PATENTSCHRIFT**

(45) Veröffentlichungstag und Bekanntmachung des Hinweises auf die Patenterteilung:
**29.05.2024   Patentblatt 2024/22**

(21) Anmeldenummer: **20205609.9**

(22) Anmeldetag: **04.11.2020**

(51) Internationale Patentklassifikation (IPC):
**G01F 15/00** *(2006.01)*     **G01F 25/10** *(2022.01)*
**F16K 37/00** *(2006.01)*     **G01M 13/00** *(2019.01)*
**G05D 7/06** *(2006.01)*

(52) Gemeinsame Patentklassifikation (CPC):
**G01F 15/005; F16K 37/0041; F16K 37/005; G01F 25/10; G05D 7/0635**

(54) **COMPUTERIMPLEMENTIERTES VERFAHREN ZUM BETREIBEN EINES FLUID-ABSPERRORGANS UND ENTSPRECHENDES FLUID-ABSPERRORGAN**

COMPUTER-IMPLEMENTED METHOD FOR OPERATING A SHUT-OFF VALVE AND CORRESPONDING SHUT-OFF VALVE

PROCÉDÉ MIS EN OEUVRE PAR ORDINATEUR DESTINÉ AU FONCTIONNEMENT D'UNE VANNE DE SECTIONNEMENT ET VANNE DE SECTIONNEMENT CORRESPONDANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.05.2022   Patentblatt 2022/19**

(73) Patentinhaber: **FOCUS-ON V.O.F.**
**3313 LC Dordrecht (NL)**

(72) Erfinder: **HOGENDOORN, Cornelis Johannes**
**4211 BG Spijk (NL)**

(74) Vertreter: **Gesthuysen Patentanwälte Partnerschaftsgesellschaft mbB**
**Huyssenallee 68**
**45128 Essen (DE)**

(56) Entgegenhaltungen:
**EP-A1- 3 117 137       EP-B1- 3 117 137**
**US-A- 5 748 469       US-A1- 2006 111 875**
**US-A1- 2008 221 822**

**Beschreibung**

Die Erfindung betrifft ein computerimplementiertes Verfahren zum Betreiben eines Absperrorgans für ein Fluid, mit einem das Fluid führenden Gehäuse, mit einer in dem Gehäuse vorgesehenen Einströmöffnung für das Fluid und mit einer in dem Gehäuse vorgesehenen Ausströmöffnung für das Fluid, mit einem in dem Gehäuse zwischen der Einströmöffnung und der Ausströmöffnung ausgebildeten Strömungskanal für das Fluid, mit einer in dem Strömungskanal angeordneten Sperrvorrichtung mit einem einstellbaren Strömungsquerschnitt für das Fluid in der Sperrvorrichtung und damit im Strömungskanal und mit einer Steuer- und Auswerteeinheit zur Ansteuerung der Sperrvorrichtung und zur Erfassung von Zustandsgrößen des Absperrorgans. Darüber hinaus betrifft die Erfindung auch ein entsprechendes Absperrorgan, mit dem es möglich ist, das computerimplementierte Verfahren zu realisieren.

Absperrorgane für Fluide, im Wesentlichen also für gasförmige oder flüssige Medien, sind seit langer Zeit in ganz unterschiedlicher technischer Ausführungen im Einsatz, sei es in prozesstechnischen Anlagen (z. B. Lebensmittelindustrie, Chemie, Erdölverarbeitung), in Gebäudeinstallationen und beispielsweise auch in der Medizintechnik, in der Fahrzeugtechnik einschließlich Luft- und Raumfahrt. Die Sperrvorrichtungen der Absperrorgane weisen üblicherweise eine Sperrkörperaufnahme und einen in der Sperrkörperaufnahme beweglichen Sperrkörper auf, wobei durch Bewegen des Sperrkörpers in der Sperrkörperaufnahme der Strömungsquerschnitt für das Fluid in der Sperrvorrichtung und damit im Strömungskanal veränderbar ist.

Die Sperrvorrichtungen der Absperrorgane werden häufig automatisiert angesteuert, um den Mengenstrom des durch das Absperrorgan fließenden Fluids im Rahmen einer übergeordneten Steuerung oder Regelung einzustellen. Die Sperrvorrichtung bzw. der Sperrkörper der Sperrvorrichtung wird dann durch eine elektrisch, hydraulische oder pneumatisch angetriebene Stellvorrichtung bewegt. Durch Auslenkung des Sperrkörpers in der Sperrkörperaufnahme des Absperrorgans wird der Strömungsquerschnitt im Bereich der Sperrvorrichtung variiert und mit ihm der Strömungswiderstand, sodass der gewünschte Effekt der Einstellung eines Mengen- oder Volumenstroms erzielt wird. Aus dem vorher Gesagten ergibt sich, dass ein Absperrorgan hier nicht als eine Vorrichtung zu verstehen ist, die einen Strömungsweg entweder vollständig schließt oder vollständig öffnet. Vielmehr kann der Strömungsweg für das Fluid kontinuierlich beeinflusst werden, sodass das Absperrorgan als Strömungs- oder auch Druckregler arbeitet.

Die EP 3 117 137 A1 offenbart einen Strömungsregler mit zwei Durchflussmessern, die den Durchfluss im Strömungsregler erfassen, wobei durch die Redundanz eine erhöhte Zuverlässigkeit des Strömungsreglers erzielt wird. Die US 2008/0221822 A1 offenbart ebenfalls einen Strömungsregler, bei dem durch Anpassung einer Kalibrierkurve an veränderliche Medien eine erhöhte Messgenauigkeit erzielt wird.

Von großem Interesse ist der sichere, zuverlässige und ausfallfreie Betrieb der beschriebenen Absperrorgane, speziell dann, wenn sie einen regelungstechnischen Einsatz haben.

Aufgabe der vorliegenden Erfindung ist daher, ein Verfahren zum Betreiben eines Absperrorgans und ein entsprechendes Absperrorgan anzugeben, mit dem sich Fehler im Betrieb des Absperrorgans feststellen lassen und sich die Ausfallsicherheit des Betriebes des Absperrorgans erhöhen lässt.

Die zuvor hergeleitete Aufgabe ist bei dem eingangs beschriebenen Verfahren zum Betreiben des Absperrorgans dadurch gelöst, dass der Zusammenhang zwischen wenigstens zwei Zustandsgrößen des Absperrorgans, zwischen denen eine physikalische Abhängigkeit besteht, als mathematisches Modell des Absperrorgans beschrieben wird, dass Werte für die Zustandsgrö-βen am Absperrorgan erfasst werden und dass wenigstens einer der folgenden Verfahrensschritte ausgeführt wird:

-    überprüfen einer Zustandsgröße auf das Vorliegen eines Erfassungsfehlers beim Erfassen des Wertes der Zustandsgröße durch: berechnen eines Rechenwertes für die zu überprüfende Zustandsgröße durch Einsetzen der Werte für die anderen Zustandsgrößen in das mathematische Modell, berechnen von Rechenwerten für die anderen Zustandsgrößen durch Einsetzen des Rechenwertes für die zu überprüfende Zustandsgröße und der Werte der anderen Zustandsgrößen in das mathematische Modell, signalisieren eines Erfassungsfehlers bei der überprüften Zustandsgröße, wenn der Rechenwert der zu überprüfenden Zustandsgröße von dem erfassten Wert der zu überprüfenden Zustandsgröße abweicht und die Rechenwerte der anderen Zustandsgrößen von den korrespondierenden erfassten Werten der anderen Zustandsgrößen nicht abweichen,

-    ersetzen des erfassten Wertes der Zustandsgröße, bei der ein Erfassungsfehler aufgetreten ist, durch einen korrigierten Wert durch: berechnen eines Rechenwertes für die Zustandsgröße, bei der ein Erfassungsfehler aufgetreten ist, durch Einsetzen der Werte für die anderen Zustandsgrößen in das mathematische Modell, und ersetzen des erfassten Wertes für die Zustandsgröße, bei der ein Erfassungsfehler aufgetreten ist, durch den berechneten Rechenwert für diese Zustandsgröße.

Dem Verfahren liegt zunächst zugrunde, dass ein geeignetes mathematisches Modell der physikalischen Zusammenhänge verschiedener Zustandsgrößen des Absperrorgans erstellt wird. Es kann sich hier um eine im mathematischen Sinne analytische Beschreibung der physikalischen Zusammenhänge handeln, beispielsweise in Form einer aus der Systemtheorie bekannten Zustandsraumdarstellung von Zustandsgrößen des Absperrorgans. Derartige Zustandsgrößen können beispielsweise sein der einströmseitige und ausströmseitige Druck innerhalb des Mediums, die Temperatur und die Viskosität des Mediums, der Strömungswiderstand des Absperrorgans in Abhängigkeit von der Ansteuerung der Sperrvorrichtung (Stellposition des Sperrkörpers), die Strömungsgeschwindigkeit in einem bestimmten Abschnitt des Absperrorgans und dergleichen mehr. Die Zusammenhänge zwischen den verschiedenen Zustandsgrößen müssen aber nicht unbedingt analytisch erfasst sein, sie können beispielsweise auch in Form von tabellarischen Kennfeldern erfasst sein, als ein neuronales Netz oder in Form von anderen Beschreibungsvarianten, die aus der mathematischen Modellbildung physikalischer Systeme bekannt sind. Wichtig ist, dass das mathematische Modell den Zusammenhang der ausgewählten Zustandsgrößen im fehlerfreien Zustand des Absperrorgans abbildet. Das so erstellte mathematische Modell könnte als "digitaler Zwilling" des physikalisch realen Absperrorgans bezeichnet werden.

Bei den Zustandsgrößen handelt es sich um solche Zustandsgrößen, die am Absperrorgan auch erfasst werden können, also beispielsweise durch Messung über einen Sensor oder durch Auslesen einer Stellgröße (z. B. Stellposition eines Sperrkörpers innerhalb der Sperrvorrichtung.

Die aufgezeigten Verfahrensschritte können separat oder auch in Zusammenhang miteinander ausgeführt werden.

Ein nicht zur Erfindung gehörender Verfahrensschritt sieht vor das Überprüfen der Konsistenz der Werte der Zustandsgrößen durch Einsetzen der Werte der Zustandsgrößen in das mathematische Modell, und bei Feststellung einer Inkonsistenz signalisieren des Vorliegens eines Erfassungsfehlers bei den Zustandsgrößen,

Bei der Überprüfung der Konsistenz der Werte der Zustandsgrößen geht es darum, überhaupt einen Fehlerzustand zu erkennen. Da das mathematische Modell den fehlerfreien Zusammenhang zwischen den Zustandsgrößen des Absperrorgans abbildet, lassen sich die fehlerfrei erfassten Werte für die Zustandsgrößen widerspruchsfrei in das mathematische Modell einsetzen. Wenn das mathematische Modell beispielsweise in einer impliziten Formulierung m der n Zustandsgrößen $x_1$ bis $x_n$ besteht, also beispielsweise in der Form

$$0 = m(x_1, ..., x_j, ... \ x_n)$$

dann wird dieser Zusammenhang erfüllt, wenn die fehlerfrei erfassten Werte $x_{1,m}$ bis $x_{n,m}$ für die Zustandsgrößen in den Zusammenhang eingesetzt werden. Die Berechnung des funktionalen Zusammenhangs m wird dann also Null ergeben. Die Werte $x_{1,m}$ bis $x_{n,m}$ der Zustandsgrößen $x_1$ bis $x_n$ verhalten sich also konsistent mit dem mathematischen Modell.

Umgekehrt gilt, dass bei einer fehlerhaften Erfassung eines Wertes für eine Zustandsgröße (oder auch für mehrere Zustandsgrößen) sich die Werte für die Zustandsgrößen nicht mehr konsistent, also widerspruchsfrei, in das mathematische Modell einsetzen lassen. Bei dem zuvor angegebenen Beispiel der impliziten Formulierung des mathematischen Modells mit dem funktionalen Zusammenhang m wäre das Ergebnis also nicht mehr 0.

Andere mathematische Formulierungen könnten auch so aussehen, dass eine Zustandsgröße das Ergebnis eines funktionalen Zusammenhangs zwischen anderen Zustandsgrößen ist (explizite Formulierung).

Für den Fachmann versteht es sich von selbst, dass die erfassten Werte für Zustandsgrößen auch im fehlerfreien Fall immer nur mit einer bestimmten Messgenauigkeit, also immer mit einem bestimmten Messfehler behaftet, aufgenommen werden können. Eine Konsistenz der erfassten Zustandsgrö-βen mit dem mathematischen Modell besteht demzufolge also nicht nur dann, wenn im mathematischen Sinne eine exakte Widerspruchsfreiheit und Erfüllung des mathematischen Zusammenhangs hergestellt wird, sondern auch dann, wenn eine Abweichung bis zu einem gewissen Grade vorliegt. In dem oben angegebenen Beispiel einer impliziten Formulierung des mathematischen Modells liegt also eine Konsistenz nicht nur dann vor, wenn das Ergebnis nach Einsetzen der erfassten Werte für die Zustandsgrößen exakt 0 ist, sondern wenn innerhalb einer gewissen Fehlertoleranz ein Wert nahe 0 erreicht wird. Das ist aber grundsätzlich so beim Arbeiten mit echten technischen Systemen und entsprechenden Messwerten.

Kann eine Konsistenz (innerhalb der zugestandenen Fehlergrenze) nicht festgestellt werden, wird das Vorliegen eines Erfassungsfehlers bei den Zustandsgrößen signalisiert. Dieses Signalisieren einer Inkonsistenz kann darin bestehen, dass beispielsweise innerhalb der Steuer- und Auswerteeinheit ein entsprechendes Flag gesetzt wird, es kann aber auch beispielsweise eine entsprechende Fehlermeldung an dem Absperrorgan selbst signalisiert werden oder über eine entsprechende Kommunikationsschnittstelle nach außen weitergemeldet werden.

Gemäß einer Lehre der Erfindung kann eine Zustandsgröße konkret auf das Vorliegen eines Erfassungsfehlers untersucht werden. Dazu ist es nicht erforderlich, das zuvor genannte Verfahren zur Überprüfung der Konsistenz auszuführen. Jedenfalls ist erfindungsgemäß erkannt worden, dass ein Fehler bei der Erfassung eines Wertes nur einer einzigen Zustandsgröße mit Hilfe des mathematischen Modells so ausgewertet werden kann, dass eine Zuordnung zu der betroffenen Zustandsgröße exakt möglich ist. Die Überprüfung einer Zustandsgröße auf das Vorliegen eines Erfassungsfehlers beginnt damit, dass zunächst ein Rechenwert für die zu überprüfende Zustandsgröße berechnet wird, indem die Werte für die anderen Zustandsgrößen in das mathematische Modell eingesetzt werden. Unabhängig davon, wie das mathematische Modell formuliert ist, lässt sich immer herausfinden, welchen Wert die zu überprüfende Zustandsgröße haben müsste, damit das mathematische Modell insgesamt konsistent erfüllt wird. Wenn das mathematische Modell nicht explizit nach der zu überprüfenden Zustandsgröße aufgelöst ist, können beispielsweise eine Reihe von Werte für die zu überprüfende Zustandsgröße in das mathematische Modell eingesetzt werden, eine weitere Eingrenzung auf den gesuchten Rechenwert könnte über eine Intervallschachtelung erfolgen, auch könnten beispielsweise numerische Verfahren der Nullstellensuche angewendet werden. Der Rechenwert für die zu überprüfende Zustandsgröße ist jedenfalls jener Wert, bei dem das mathematische Modell konsistent erfüllt ist.

Es werden nun für alle anderen Zustandsgrößen ebenfalls Rechenwerte ermittelt und zwar unter Verwendung des Rechenwertes für die zu überprüfende Zustandsgröße und der - anderweitig, beispielsweise messtechnisch - erfassten Werte für die anderen Zustandsgrößen. Wenn der Rechenwert der zu überprüfenden Zustandsgröße von dem erfassten Wert der zu überprüfenden Zustandsgröße abweicht und darüber hinaus die Rechenwerte der anderen Zustandsgrößen von den korrespondierenden erfassten Werten der anderen Zustandsgrößen nicht abweichen, liegt ein Erfassungsfehler bei der überprüften Zustandsgröße vor. Dieser Umstand wird dann auch signalisiert, beispielsweise indem bei der überprüften Zustandsgröße ein Fehler-Flag gesetzt wird oder in einem Fehlerspeicher eine entsprechende Kennung der überprüften Zustandsgröße abgelegt wird oder eine Kennung der überprüften Zustandsgröße an dem Absperrorgan angezeigt wird oder nach außen, beispielsweise über einen Feldbus, übertragen wird. Es gibt beliebig viele Möglichkeiten, eine entsprechende Signalisierung vorzunehmen, die Möglichkeiten sind nicht auf die angebenen Beispiele beschränkt.

Dass der zuvor dargestellte Test bei Vorliegen eines einzigen Erfassungsfehlers eindeutig ist, erklärt sich dadurch, dass es immer möglich ist, mit dem mathematischen Modell einen fehlerhaft erfassten Wert für eine Zustandsgrö-ße durch einen "richtigen" berechneten Wert zu ersetzen. Wenn die zu überprüfende Zustandsgröße tatsächlich einen fehlerhaften Wert aufweist, wird dieser für alle nachfolgenden Berechnungen durch einen richtig berechneten Wert für die Zustandsgröße ersetzt, weshalb für die die anderen Zustandsgrö-βen die berechneten Werte aus dem mathematischen Modell und die erfassten Werte übereinstimmen. Wird hingegen eine Zustandsgröße überprüft, bei der keine fehlerhafte Erfassung des korrespondierenden Wertes vorliegt, wird ein richtig erfasster Wert durch einen falsch berechneten Wert ersetzt, weshalb in der Nachfolge alle anderen Tests mit allen anderen Zustandsgrö-βen fehlschlagen müssen (also Vergleich der Rechengrößen mit den erfassten Größen).

Ein alternativ oder ergänzend durchzuführender Teil des erfindungsgemäßen Verfahrens besteht in dem Ersetzen eines erfassten Wertes einer Zustandsgrö-ße für den Fall, dass ein Erfassungsfehler bei der Erfassung des Wertes dieser Zustandsgröße aufgetreten ist. Der fehlerhaft erfasste Wert der Zustandsgröße wird durch einen korrigierten Wert ersetzt. Dazu wird ein Rechenwert für die betroffene Zustandsgröße berechnet, bei der ein Erfassungsfehler aufgetreten ist, indem - wie zuvor schon ausgeführt worden ist - Werte für die anderen Zustandsgrößen in das mathematische Modell eingesetzt werden (also die regulär erfassten Werte, die messtechnisch erfasst worden sind oder durch Kenntnis bestimmter Stellgrößen beispielsweise vorhanden sind). Da, wie bereits erläutert worden ist, das mathematische Modell in der Lage ist, bei Vorliegen nur eines einzigen Erfassungsfehlers einen korrigierten und richtigen Rechenwert für diese Zustandsgröße bereitzustellen, kann dieser Rechenwert nun dazu genutzt werden, den fehlerhaft erfassten Wert für die Zustandsgröße zu ersetzen. Dadurch ist es möglich, das Absperrorgan auch beispielsweise bei einem defekten Sensor für eine Zustandsgröße weiterhin korrekt zu betreiben.

In einer Ausgestaltung der Erfindung wird die Konsistenz der Werte der Zustandsgrößen regelmäßig überprüft oder dann angestoßen, wenn in dem Absperrorgan ein anderweitiger Fehler erfasst worden ist.

Die Überprüfung einer Zustandsgröße auf das Vorliegen eines Erfassungsfehlers kann ebenso in regelmäßigen Abständen durchgeführt werden, auch ohne dass zuvor eine Konsistenzprüfung erfolgte. Die Überprüfung einer Zustandsgröße auf das Vorliegen eines Erfassungsfehlers kann beispielsweise auch dann ausgelöst werden, wenn ein Fehlersignal in dem Absperrorgan vorliegt, das nicht durch eine Konsistenzprüfung durchgeführt worden ist, sondern beispielsweise eine anderweitige Überprüfung von Sensoren.

Genauso gut kann das Ersetzen einer fehlerhaft erfassten Zustandsgröße unabhängig davon geschehen, ob zuvor eine Konsistenzprüfung oder eine Überprüfung einer Zustandsgröße auf das Vorliegen eines Erfassungsfehlers durchgeführt worden ist. Denkbar ist beispielsweise, dass eine anderweitige Sensorüberprüfung einen Fehlerzustand detektiert hat, sodass unmittelbar das Ersetzen eines fehlerhaft erfassten Wertes der betreffenden Zustandsgröße durch einen anhand des mathematischen Modells berechneten Rechenwerts erfolgt.

Bei einer vorteilhaften Ausgestaltung des Verfahrens ist vorgesehen, dass die Zustandsgröße, bei der ein Erfassungsfehler aufgetreten ist, ermittelt wird, indem die Überprüfung einer Zustandsgröße auf das Vorliegen eines Erfassungsfehlers solange mit wechselnden Zustandsgrößen durchgeführt wird, bis die Zustandsgröße gefunden ist, bei der ein Erfassungsfehler vorliegt. Die verschiedenen Zustandsgrößen können einfach der Reihe nach, also in einer festen Reihenfolge überprüft werden, es kann aber auch vorgesehen sein, die Zustandsgrößen gemäß einer zufälligen Verteilung zu überprüfen. Es sollte dann darauf geachtet werden, dass eine mehrfache Überprüfung einer Zustandsgröße vermieden wird. Ferner ist es vorteilhaft, wenn die Ermittlung abgebrochen wird, wenn eine Zustandsgröße ermittelt werden konnte, bei der ein Erfassungsfehler aufgetreten ist, oder wenn alle Zustandsgrößen überprüft worden sind, ohne dass eine Zustandsgröße ermittelt werden konnte, bei der ein Erfassungsfehler aufgetreten ist.

In einer weiter vorteilhaften Weiterentwicklung des Verfahrens wird für den Fall, dass keine Zustandsgröße ermittelt werden konnte, bei der ein Erfassungsfehler aufgetreten ist, entweder ein gravierender Fehler signalisiert (denn es ist zu vermuten, dass mehr als ein Erfassungsfehler vorliegt) und/oder das Absperrorgan wird in einen Sicherheitsmodus versetzt.

In einer Ausgestaltung des Verfahrens ist vorgesehen, dass das mathematische Modell und die zuvor beschriebenen Verfahrensschritte mit der Steuer- und Auswerteeinheit berechnet und durchgeführt werden. In einer anderen Ausgestaltung ist vorgesehen, dass das mathematische Modell und die Verfahrensschritte auf einer externen Recheneinheit außerhalb des Absperrorgans berechnet und durchgeführt werden und die erfassten Werte der Zustandsgrößen über einen Kommunikationskanal von dem Absperrorgan zu der externen Recheneinheit übertragen werden.

Die eingangs hergeleitete Aufgabe wird ebenfalls gelöst bei einem Absperrorgan für ein Fluid, mit einem das Fluid führenden Gehäuse, mit einer in dem Gehäuse vorgesehenen Einströmöffnung für das Fluid und mit einer in dem Gehäuse vorgesehenen Ausströmöffnung für das Fluid, mit einem in dem Gehäuse zwischen der Einströmöffnung und der Ausströmöffnung ausgebildeten Strömungskanal für das Fluid, mit einer in dem Strömungskanal angeordneten Sperrvorrichtung mit einem einstellbaren Strömungsquerschnitt für das Fluid in der Sperrvorrichtung und damit im Strömungskanal und mit einer Steuer- und Auswerteeinheit zur Ansteuerung der Sperrvorrichtung und zur Erfassung von Zustandsgrößen des Absperrorgans. Die hergeleitete Aufgabe wird bei dem zuvor beschriebenen Absperrorgan dadurch gelöst, dass das der Zusammenhang zwischen wenigstens zwei Zustandsgrößen des Absperrorgans, zwischen denen eine physikalische Abhängigkeit besteht, als mathematisches Modell des Absperrorgans beschrieben ist, dass Werte für die Zustandsgrößen am Absperrorgan erfasst werden, dass die Steuer- und Auswerteeinheit so ausgestaltet und eingerichtet ist, dass sie wenigstens einen der folgenden Verfahrensschritte ausführt:

- nicht erfindungsgemäß, überprüfen der Konsistenz der Werte der Zustandsgrößen durch Einsetzen der Werte der Zustandsgrößen in das mathematische Modell, und bei Feststellung einer Inkonsistenz signalisieren des Vorliegens eines Erfassungsfehlers bei den Zustandsgrößen,

- erfindungsgemäß, überprüfen einer Zustandsgröße auf das Vorliegen eines Erfassungsfehlers beim Erfassen des Wertes der Zustandsgröße durch: berechnen eines Rechenwertes für die zu überprüfende Zustandsgröße durch Einsetzen der Werte für die anderen Zustandsgrößen in das mathematische Modell, berechnen von Rechenwerten für die anderen Zustandsgrößen durch Einsetzen des Rechenwertes für die zu überprüfende Zustandsgröße und der Werte der anderen Zustandsgrößen in das mathematische Modell (außer natürlich dem Wert der Zustandsgröße, für die gerade der Rechenwert berechnet wird), signalisieren eines Erfassungsfehlers bei der überprüften Zustandsgröße, wenn der Rechenwert der zu überprüfenden Zustandsgröße von dem erfassten Wert der zu überprüfenden Zustandsgröße abweicht und die Rechenwerte der anderen Zustandsgrößen von den korrespondierenden erfassten Werten der anderen Zustandsgrößen nicht abweichen,

- erfindungsgemäß, ersetzen des erfassten Wertes der Zustandsgröße, bei der ein Erfassungsfehler aufgetreten ist, durch einen korrigierten Wert durch: berechnen eines Rechenwertes für die Zustandsgröße, bei der ein Erfassungsfehler aufgetreten ist, durch Einsetzen der Werte für die anderen Zustandsgrößen in das mathematische Modell, und ersetzen des erfassten Wertes für die Zustandsgröße, bei der ein Erfassungsfehler aufgetreten ist, durch den berechneten Rechenwert für diese Zustandsgröße.

Die Steuer- und Auswerteeinheit ist insgesamt so ausgestaltet und hergerichtet, dass sie die zuvor beschriebenen Verfahrensschritte für sich alleine genommen oder im Zusammenspiel ausführen kann.

Eine Weiterentwicklung des Absperrorgans zeichnet sich dadurch aus, dass mit jeweils einem Drucksensor der einströmseitige Mediumdruck und der ausströmseitige Mediumdruck erfasst werden, und dass eine Strömungsgeschwindigkeit des Mediums im Strömungskanal mit einem Strömungssensor erfasst wird, insbesondere mit einem Strömungssensor auf Basis von Ultraschallwellen.

Wie erläutert, gibt es verschiedene Möglichkeiten, das erfindungsgemäße Verfahren und das erfindungsgemäße Absperrorgan auszugestalten und weiterzubilden, wie es in den, den unabhängigen Patentansprüchen nachgeordneten Patentansprüchen beschrieben ist. Bevorzugte Ausführungsbeispiele werden nachfolgend anhand der Zeichnung beschrieben. In der Zeichnung zeigen

Fig. 1    schematisch ein erstes Ausführungsbeispiel eines erfindungsgemäßen Absperrorgans,

Fig. 2    schematisch ein weiteres Ausführungsbeispiel eines erfindungsgemäßen Absperrorgans

Fig. 3    schematisch ein erfindungsgemäßes Teilverfahren zum Betreiben eines Absperrorgans

Fig. 4    schematisch ein weiteres erfindungsgemäßes Teilverfahren zum Betreiben eines Absperrorgans und

Fig. 5    eine weiteres erfindungsgemäßes Teiverfahren zum Betreiben eines Absperrorgans.

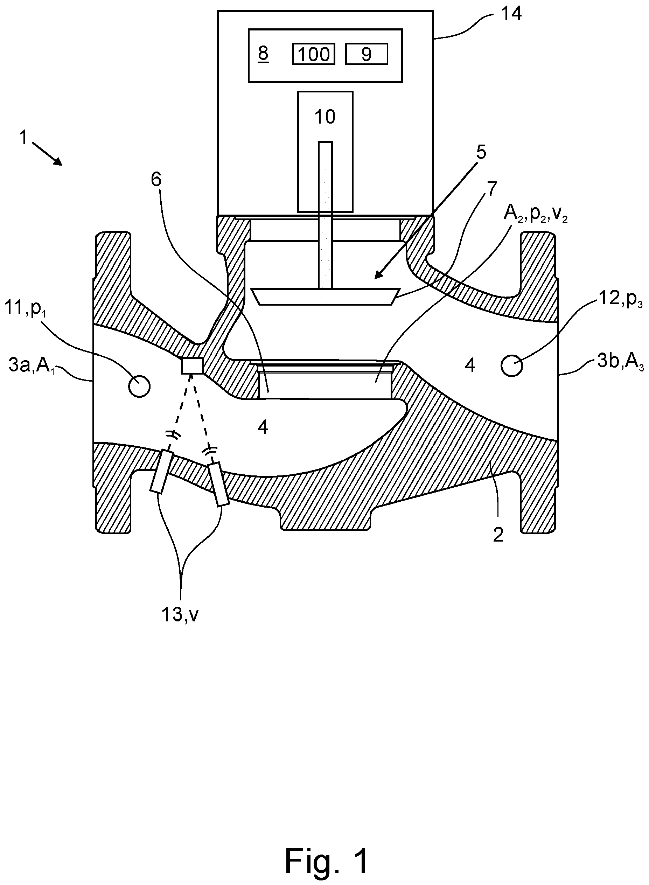

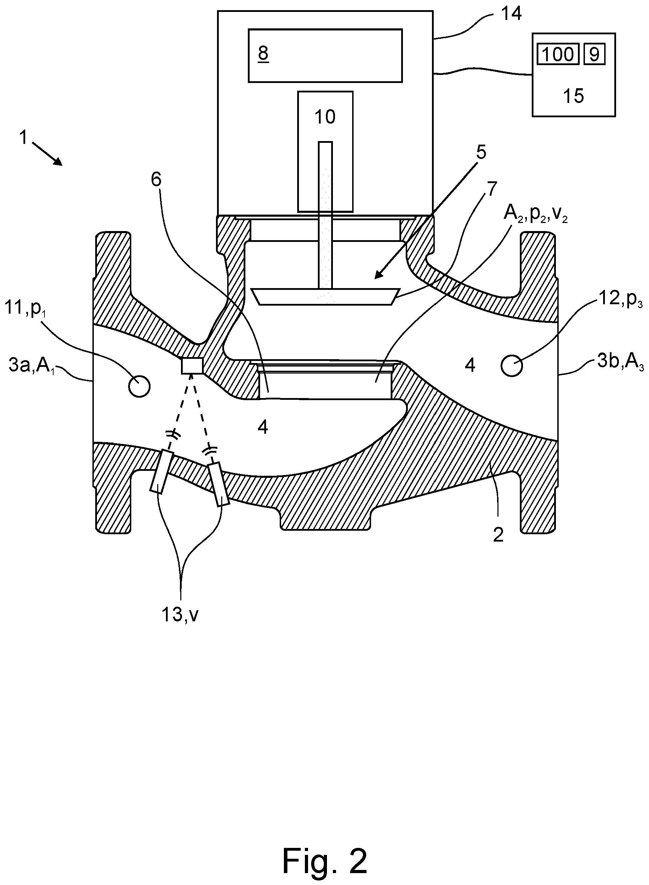

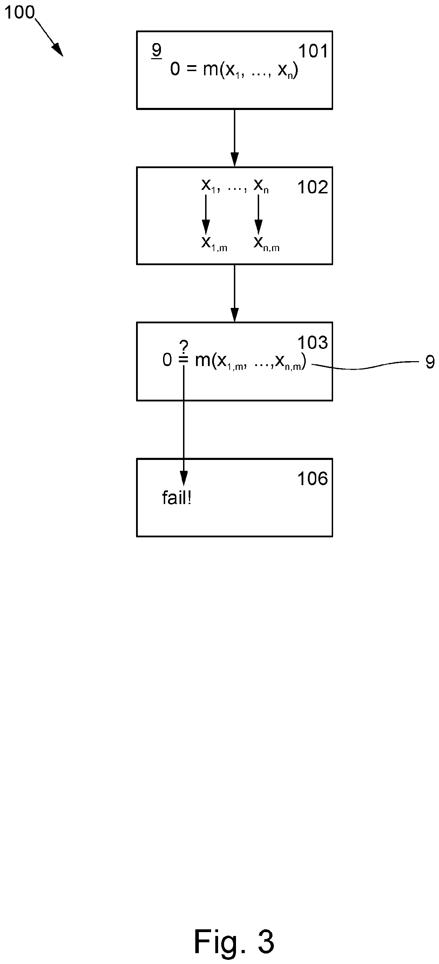

In den Fig. 1 bis 5 ist jeweils schematisch ein computerimplementiertes Verfahren 100 zum Betreiben eines Absperrorgans 1 für ein Fluid dargestellt. In den Fig. 1 und 2 liegt der Schwerpunkt auf der gegenständlichen Darstellung des Absperrorgans 1, in den Fig. 3 bis 5 liegt der Schwerpunkt auf der schematischen Darstellung des computerimplementierten Verfahrens 100.

In den Fig. 1 und 2 ist zu erkennen, dass das Absperrorgan 1 ein das Fluid führendes Gehäuse 2 aufweist mit einer in dem Gehäuse 2 vorgesehenen Einströmöffnung 3a mit einem Querschnitt $A_1$ für das Fluid und mit einer in dem Gehäuse 2 vorgesehenen Ausströmöffnung 3b mit einem Querschnitt $A_3$ für das Fluid. In dem Gehäuse 2 ist zwischen der Einströmöffnung 3a und der Ausströmöffnung 3b ein Strömungskanal 4 für das Fluid ausgebildet. In dem Strömungskanal 4 ist eine Sperrvorrichtung 5 mit einem einstellbaren Strömungsquerschnitt $A_2$ für das Fluid angeordnet. Die Sperrvorrichtung 5 wird hier realisiert durch eine Sperrkörperaufnahme 6 und einen Sperrkörper 7. Durch Auslenkung des Sperrkörpers 7 kann der Strömungsquerschnitt $A_2$ für das Fluid variiert werden. Befindet sich der Sperrkörper 7 in der Sperrkörperaufnahme 6, ist der Strömungsquerschnitt $A_2$ für das Fluid geschlossen, der Strömungswiderstand demzufolge am Höchsten, ist der Sperrkörper 7 komplett zurückgefahren, ist der Strömungsquerschnitt $A_2$ für das Fluid maximal freigegeben und der Strömungswiderstand für das Fluid demzufolge am Geringsten. Auf die genaue Ausgestaltung der Sperrvorrichtung 5 kommt es hier jedoch nicht an, sie könnte auch anders umgesetzt sein, beispielsweise als Absperrschieber, Absperrklappe oder als Kugelhahn.

Das Absperrorgan 1 umfasst ferner eine Steuer- und Auswerteeinheit 8 zur Ansteuerung der Sperrvorrichtung 5 und zur Erfassung von Zustandsgrößen x des Absperrorgans 1.

Allen Teilvarianten des Verfahrens 100 ist gemeinsam, dass der Zusammenhang zwischen wenigstens zwei Zustandsgrößen x des Absperrorgans 1, zwischen denen eine physikalische Abhängigkeit besteht, als mathematisches Modell 9 des Absperrorgans 1 beschrieben wird 101. Das mathematische Modell 9 ist in den Fig. 3 bis 5 jeweils in dem obersten Kästchen dargestellt. Hier besteht das mathematische Modell 9 in einem impliziten Zusammenhang aller Zustandsgrößen $x_1, ..., x_n$ in der Funktion m.

Den Teilverfahren in den Fig. 3 bis 5 ist ebenfalls gemein, dass Werte $x_m$ für die Zustandsgrößen x am Absperrorgan 1 erfasst werden 102. Für die Zustandsgröße $x_1$ wird also der Wert $x_{1,m}$ erfasst. Bei dem Erfassen kann es sich um einen messtechnischen Vorgang handeln, es kann aber auch beispielsweise eine Stellgröße herangezogen werden. Bei einer solchen Stellgröße könnte es sich beispielsweise um eine Stellgröße für den Stellantrieb 10 für den Sperrkörper 7 handeln.

In Fig. 3 ist dargestellt die nicht erfindungsgemäße Überprüfung 103 der Konsistenz der Werte $x_m$ der Zustandsgrößen x durch Einsetzen der Werte $x_m$ der Zustandsgrößen x in das mathematische Modell 9 bzw. den funktionalen Zusammenhang m innerhalb des mathematischen Modell 9. Bei Feststellung einer Inkonsistenz wird das Vorliegen eines Erfassungsfehlers bei den Zustandsgrößen signalisiert 106. Im vorliegenden Fall wird ein entsprechender Fehlerhinweis (fail!) in der Steuer- und Auswerteeinheit 8 des Absperrorgans 1 abgelegt.

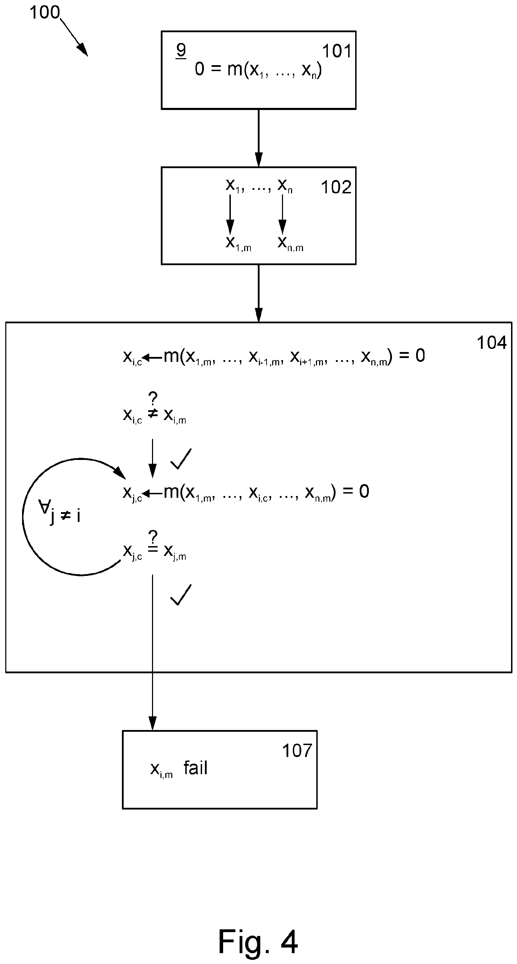

In Fig. 4 ist eine weitere Teilvariante des Verfahrens 100 dargestellt. Diese Teilvariante des Verfahrens 100 dient der Überprüfung 104 einer Zustandsgröße x auf das Vorliegen eines Erfassungsfehlers beim Erfassen des Wertes $x_m$ der Zustandsgröße x. Dieser Überprüfung 104 liegt die Erkenntnis zugrunde, dass ein einzelner Fehler bei der Erfassung eines Wertes für eine Zustandsgröße exakt detektiert werden kann. Dazu wird zunächst für die zu überprüfende Zustandsgröße, in Fig. 4 ist dies die Zustandsgröße xi, ein Rechenwert $x_{i,c}$ berechnet. Dazu werden die erfassten Werte $x_{1,m}$ bis $x_{n,m}$ für die anderen Zustandsgrößen, also $x_1$ bis $x_n$, in das mathematische Modell 9 eingesetzt. Wenn das mathematische Modell 9 in Form eines impliziten Zusammenhangs gegeben ist, kann der Rechenwert $x_{i,c}$ entweder nummerisch berechnet werden oder auch ermittelt werden, indem testweise eine Reihe von Werten für xi in den Zusammenhang m eingesetzt werden, bis das mathematische Modell 9 widerspruchsfrei erfüllt wird.

Wenn insgesamt ein Fehler vorliegt, unabhängig davon, ob der Erfassungsfehler bei der Zustandsvariablen $x_i$ vorliegt, dann wird der Rechenwert $x_{i,c}$ für die Zustandsgröße $x_i$ von dem erfassten Wert $x_{i,m}$ für die Zustandsgröße $x_i$ abweichen. Dies ist eine notwendige Voraussetzung dafür, die Überprüfung 104 weiter fortzuführen.

Danach werden dann Rechenwerte für die anderen Zustandsgrößen $x_j$ (für j ungleich i) berechnet, nämlich durch Einsetzen des Rechenwertes $x_{i,c}$ für die zu überprüfende Zustandsgröße $x_i$ und der Werte für die anderen Zustandsgrößen ($x_{1,m}$ bis $x_{n,m}$). Auch hier wird natürlich nicht der Wert für die Zustandsgrößen $x_j$ eingesetzt, für die gerade der Rechenwert $x_{j,c}$ berechnet wird, dieser Rechenwert ist ja gerade Ergebnis des Vorgangs. Wenn der Rechenwert $x_{i,c}$ der zu überprüfenden Zustandsgröße xi von dem erfassten Wert $x_{i,m}$ der zu überprüfenden Zustandsgröße $x_i$ abweicht und die Rechenwerte $x_{j,c}$ der anderen Zustandsgrößen $x_j$ von den korrespondierten erfassten Werten $x_{j,m}$ der anderen Zustandsgrößen nicht abweichen, wird signalisiert 107, dass bei der Erfassung des Wertes $x_{i,m}$ der Zustandsvariablen xi ein Erfassungsfehler vorliegt.

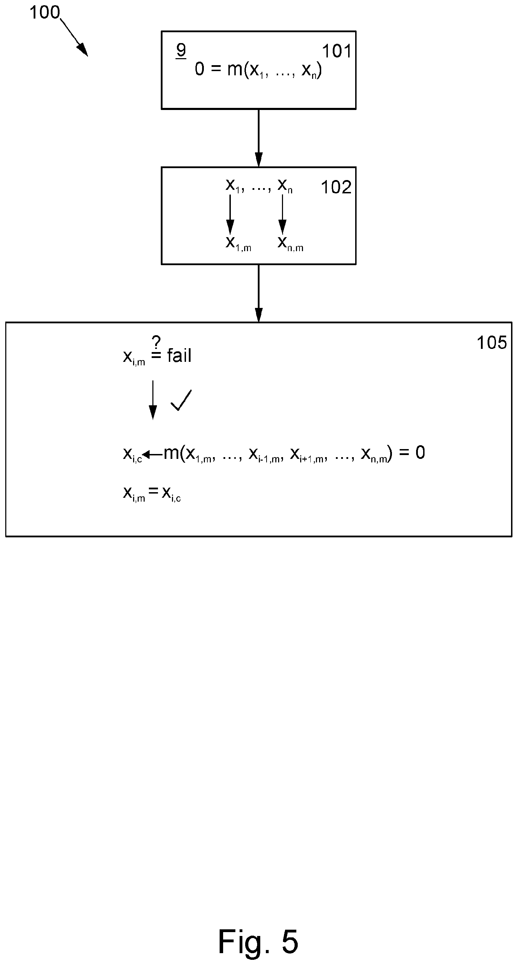

Fig. 5 zeigt eine dritte Teilvariante des computerimplementierten Verfahrens 100, bei der es um das Ersetzen 105 des fehlerhaften Wertes einer Zustandsgröße geht. Zunächst wird also überprüft, ob ein Erfassungsfehler bei der Erfassung des Wertes $x_{i,m}$ für die Zustandsgröße xi vorhanden ist. Diese Überprüfung kann auch einfach darin bestehen, dass ein solcher Fehler faktisch gemeldet wird, sodass eine separate Prüfung gemäß dem zweiten Teilverfahren 104 nicht mehr angestoßen werden muss. Wenn also Klarheit darüber besteht, dass ein Erfassungsfehler vorliegt bei der Zustandsgröße xi, wird ein Rechenwert $x_{i,c}$ der Zustandsgröße xi anhand des mathematischen Modells 9 berechnet, wie dies schon zuvor erläutert worden ist. Es werden also Werte $x_{1,m}$ bis $x_{n,m}$ für die anderen Zustandsgrößen xi bis $x_n$ in das mathematische Modell 9 eingesetzt. Der daraus resultierende Rechenwert $x_{i,c}$ für die Zustandsgröße $x_i$, bei der ein Erfassungsfehler aufgetreten ist, ersetzt dann den fehlerhaften Wert $x_{i,m}$ der Zustandsgröße xi.

An dieser Stelle soll noch einmal darauf eingegangen werden, wie ein mathematisches Modell 9 des Absperrorgans 1 aussehen könnte. Bei den dargestellten Ausführungsbeispielen des Verfahrens 100 wird das mathematische Modell 9 durch eine vereinfachte gleichungsmäßige Beschreibung analytisch hergeleitet. Als Zustandsgrößen des Absperrorgans 1, zwischen denen eine physikalische Abhängigkeit besteht, werden hier gewählt der einströmseitige Mediumdruck $p_1$, der über den einströmseitigen Drucksensor 11 erfasst wird, der ausströmseitige Mediumdruck $p_3$, der über den ausströmseitigen Drucksensor 12 erfasst wird, und eine Strömungsgeschwindigkeit v des Mediums im Strömungskanal 4, die über Ultraschallsensoren 13 über eine Laufzeitmessung erfasst wird. Bei inkompressiblen Fluiden kann die im Querschnitt der Messung der Strömungsgeschwindigkeit v ermittelte Strömungsgeschwindigkeit v sehr einfach auf jeden anderen Querschnitt im Strömungskanal 4 umgerechnet werden. Die Sensoren sind hier nur schematisch angedeutet. Zur Wahrung der Übersichtlichkeit ist auch keine Verkabelung zwischen den Sensoren und der der Steuer- und Auswerteeinheit 8 dargestellt. Bei dem hier dargestellten einfachen Ansatz zur gleichungsmäßigen Beschreibung eines mathematischen Modells 9 des Absperrorgans 1 werden zunächst die Strömungs- und Druckverhältnisse betrachtet vom einströmseitigen Querschnitt $A_1$ hin zu dem Querschnitt $A_2$ in der variablen Engstelle der Sperrvorrichtung 5 und dann werden die Strömungs- und Druckverhältnisse betrachtet vom Querschnitt $A_2$ in der variablen Engstelle der Sperrvorrichtung 5 zum ausströmseitigen Querschnitt $A_3$. Der Strömungsquerschnitt $A_2$ hängt von der Stellposition des Sperrkörpers 7 ab und damit von seiner Beabstandung zu der Sperrkörperaufnahme 6. Für die beiden Abschnitte, also von der Einströmseite bis zur Sperrvorrichtung 5 und von der Sperrvorrichtung 5 zur Ausströmseite können die Druckverlustbeiwerte K wie folgt angegeben werden (Gleichungen 1 und 2):

$$K_{1 \to 2} = 0.5\left(1 - \frac{A_2}{A_1}\right)$$

$$K_{2 \to 3} = \left(1 - \frac{A_2}{A_3}\right)^2$$

Der Druckverlust in den beiden vorgenannten Abschnitten kann unter Verwendung der zuvor aufgezeigten Druckverlustbeiwerte wie folgt formuliert werden (Gleichungen 3 und 4):

$$p_1 - p_2 = K_{1 \to 2}\frac{1}{2}\rho_{\mathrm{l}} v_2{}^2 = 0.5\left(1 - \frac{A_2}{A_1}\right)\frac{1}{2}\rho_{\mathrm{l}} v_2{}^2$$

$$p_2 - p_3 = K_{2 \to 3}\frac{1}{2}\rho_{\mathrm{l}} v_2{}^2 = \left(1 - \frac{A_2}{A_3}\right)^2\frac{1}{2}\rho_{\mathrm{l}} v_2{}^2$$

Hier bezeichnen $p_1$, $p_2$ und $p_3$ die Drücke im Einströmbereich, in der Sperrvorrichtung und im Ausströmbereich. $\rho_1$ ist die Dichte des Fluids und v ist die Strömungsgeschwindigkeit. Bei den hier aufgezeigten Zusammenhängen wird von einem inkompressiblen Fluid ausgegangen. Der Vollständigkeit halber wird darauf hingewiesen, dass entsprechende Zusammenhänge ohne Weiteres auch für kompressible Fluide formuliert werden können. Durch Addition der Gleichungen 3 und 4 zur Beschreibung des Druckabfalls und unter der Annahme, dass der Einströmquerschnitt $A_1$ gleich dem Ausströmquerschnitt $A_3$ ist, werden folgende Zusammenhänge unter Eliminierung von $p_2$ erhalten (Gleichungen 5 bis 7):

$$(p_1 - p_2) + (p_2 - p_3) = \frac{1}{2}\rho_{\mathrm{l}} v_2^2 \cdot 0.5\left(1 - \frac{A_2}{A_1}\right) + \frac{1}{2}\rho_{\mathrm{l}} v_2^2 \cdot \left(1 - \frac{A_2}{A_3}\right)^2$$

$$(p_1 - p_3) = \frac{1}{2}\rho_1 v_2^2 \cdot \left(0.5\left(1 - \frac{A_2}{A_1}\right) + \left(1 - \frac{A_2}{A_1}\right)^2\right)$$

$$\Delta p = \frac{1}{2}\rho_1 v_1^2 \cdot \left(\frac{A_1}{A_2}\right)^2 \left(0.5\left(1 - \frac{A_2}{A_1}\right) + \left(1 - \frac{A_2}{A_1}\right)^2\right)$$

Der Strömungsquerschnitt $A_2$ ist abhängig von der Ventilstellung und kann einfach durch Kenntnis der Stellposition des Sperrkörpers 7 ermittelt werden. Der Zusammenhang gemäß Gleichung 7 stellt hier das mathematische Modell 9 dar, wobei der gleichungsmäßige Zusammenhang im vorliegenden Fall sogar nach jeder Zustandsgröße, also $p_1$, $p_2$ und $v_1$, aufgelöst werden könnte, sodass für jede Zustandsgröße eine explizite Bestimmungsgleichung bestimmt werden kann. Im vorliegenden Fall ist es so, dass die Werte für die Zustandsgrößen, also $p_{1,m}$, $p_{3,m}$ und $v_{1,m}$ messtechnisch durch die vorgenannten Sensoren, Drucksensoren 11 und 12 sowie Strömungssensoren 13, messtechnisch ermittelt werden. Der weitere erforderliche Parameter, nämlich der Strömungsquerschnitt $A_2$ in der Sperrvorrichtung 5 wird über die Stellposition des Sperrkörpers 7 berechnet. Der Strömungsquerschnitt $A_2$ könnte hier genauso gut als weitere Zustandsgröße betrachtet werden.

Für die Konsistenzprüfung 103 werden dann alle Zustandsgrößen $p_1$, $p_2$, $v_1$ und auch der Parameter $A_2$ (der Querschnitt A1 ist unveränderlich) in das Modell gemäß Gleichung 7 eingesetzt und das mathematische Modell 9 gemäß Gleichung 7 wird dann auf Konsistenz innerhalb einer gewissen Fehlergrenze hin untersucht. Wird diese Fehlergrenze eingehalten, liegt Konsistenz vor und damit wird auch auf die Fehlerfreiheit der beteiligten Sensoren rückgeschlossen. Dies ist vernünftig, da Erfassungsfehler bei zwei oder mehr Sensoren, die sich in ihrer Wirkung hinsichtlich des mathematischen Modells 9 gerade genau aufheben, extrem unwahrscheinlich sind.

Sinngemäß wird auch vorgegangen bei dem Überprüfen 104 einer Zustandsgröße auf das Vorliegen eines Erfassungsfehlers beim Erfassen des Wertes der Zustandsgröße. Das Gleiche gilt für das Ersetzen 105 eines erfassten Wertes einer Zustandsgröße, wenn diese fehlerhaft erfasst worden ist. Wenn beispielsweise klar wäre, dass der Drucksensor 11 im Einströmbereich des Absperrorgans 1 fehlerhaft arbeitet, wäre also der erfasste Wert $p_{1,m}$ der Zustandsgröße $p_1$ durch einen entsprechenden Rechenwert $p_{1,c}$ zu ersetzen. Dieser Rechenwert ergibt sich aus Gleichung 7 einfach dadurch, dass die Gleichung nach dem Druck $p_1$ aufgelöst wird und die erfassten Werte der anderen Zustandsgrößen eingesetzt werden. Da das mathematische Modell 9 den physikalischen Zusammenhang zwischen den Zustandsgrößen richtig wiedergibt, also für den fehlerfreien Fall, kann der Fehler einer einzigen Zustandsgröße bzw. beim Erfassen einer einzigen Zustandsgröße immer rechnerisch kompensiert werden.

In Fig. 1 ist dargestellt, dass das mathematische Modell 9 in der Steuer- und Auswerteeinheit 8 abgelegt ist und demzufolge wird auch dort das computerimplementierte Verfahren 100 ausgeführt. Die Steuer- und Auswerteeinheit ist üblicherweise ein eingebetteter Rechner auf Basis eines Mikrocontrollers oder eines digitalen Signalprozessors. Auf die genaue technische Ausführung kommt es hier nicht an. Die Lösung bei der Ausgestaltung in Fig. 2 weicht davon ab. Hier ist das mathematische Modell 9 in einer externen Recheneinheit 15 abgelegt, beispielsweise in einem Prozessleitsystem. Die erfassten Zustandsgrößen werden hier von der Steuer- und Auswerteeinheit 8 zu der externen Recheneinheit 15 über ein Feldbus übermittelt, wobei die weitergehenden Verfahrensschritte dann in der externen Recheneinheit 15 ausgeführt werden.

**Bezugs- und Formelzeichen**

| | |
|---|---|
| 1 | Absperrorgan |
| 2 | Gehäuse |
| 3a | Einströmöffnung |
| 3b | Ausströmöffnung |
| 4 | Strömungskanal |
| 5 | Sperrvorrichtung |
| 6 | Sperrkörperaufnahme |
| 7 | Sperrkörper |
| 8 | Steuer- und Auswerteeinheit |
| 9 | mathematisches Modell |
| 10 | Stellantrieb |
| 11 | einströmseitiger Drucksensor |
| 12 | ausströmseitiger Drucksensor |

| 13 | Ultraschallsensoren |
| 14 | Gehäuseergänzung |
| 15 | externe Recheneinheit |
| 100 | Computerimplementiertes Verfahren |
| 101 | Beschreiben eines mathematischen Modells des Absperrorgans |
| 102 | Erfassen von Werten für Zustandsgrößen |
| 103 | Konsistenzüberprüfung |
| 104 | Überprüfen einer Zustandsgröße auf Erfassungsfehler |
| 105 | Ersetzen eines fehlerhaft erfassten Wertes durch einen Rechenwert |
| 106 | Signalisieren einer Inkonsistenz |
| 107 | Signalisieren einer fehlerhaft erfassten Zustandsgröße |
| $x$ | Zustandsgröße |
| $x_m$ | erfasster Wert für die Zustandsgröße |
| $x_c$ | Rechenwert aus mathematischem Modell für die Zustandsgröße |
| $m$ | Zusammenhang im mathematischen Modell |
| $p_1$ | einströmseitiger Druck |
| $p_2$ | Druck im Strömungsquerschnitt der Sperrvorrichtung |
| $p_3$ | ausströmseitiger Druck |
| $A_1, A_3$ | einströmseitiger und ausströmseitiger Strömungsquerschnitt |
| $A_2$ | Strömungsquerschnitt in der Sperrvorrichtung |
| $K_1, K_2$ | Druckverlustbeiwerte |
| $\rho_1$ | Dichte des Fluids |

**Patentansprüche**

1. Computerimplementiertes Verfahren (100) zum Betreiben eines Absperrorgans (1) für ein Fluid, mit einem das Fluid führenden Gehäuse (2), mit einer in dem Gehäuse (2) vorgesehenen Einströmöffnung (3a) für das Fluid und mit einer in dem Gehäuse (2) vorgesehenen Ausströmöffnung (3b) für das Fluid, mit einem in dem Gehäuse (2) zwischen der Einströmöffnung (3a) und der Ausströmöffnung (3b) ausgebildeten Strömungskanal (4) für das Fluid, mit einer in dem Strömungskanal (4) angeordneten Sperrvorrichtung (5) mit einem einstellbaren Strömungsquerschnitt für das Fluid in der Sperrvorrichtung (5) und damit im Strömungskanal (4) und mit einer Steuer- und Auswerteeinheit (8) zur Ansteuerung der Sperrvorrichtung (5) und zur Erfassung von Zustandsgrößen des Absperrorgans (1), **dadurch gekennzeichnet,**

   **dass** der Zusammenhang zwischen wenigstens zwei Zustandsgrößen des Absperrorgans (1), zwischen denen eine physikalische Abhängigkeit besteht, als mathematisches Modell (9) des Absperrorgans (1) beschrieben wird,
   **dass** Werte für die Zustandsgrößen am Absperrorgan (1) erfasst werden,
   **dass** wenigstens einer der folgenden Verfahrensschritte ausgeführt wird:

   - überprüfen (104) einer Zustandsgröße auf das Vorliegen eines Erfassungsfehlers beim Erfassen des Wertes der Zustandsgröße durch: berechnen eines Rechenwertes für die zu überprüfende Zustandsgröße durch Einsetzen der Werte für die anderen Zustandsgrößen in das mathematische Modell (9), berechnen von Rechenwerten für die anderen Zustandsgrößen durch Einsetzen des Rechenwertes für die zu überprüfende Zustandsgröße und der Werte der anderen Zustandsgrößen in das mathematische Modell, signalisieren (107) eines Erfassungsfehlers bei der überprüften Zustandsgröße, wenn der Rechenwert der zu überprüfenden Zustandsgröße von dem erfassten Wert der zu überprüfenden Zustandsgröße abweicht und die Rechenwerte der anderen Zustandsgrößen von den korrespondierenden erfassten Werten der anderen Zustandsgrößen nicht abweichen,
   - ersetzen (105) des erfassten Wertes der Zustandsgröße, bei der ein Erfassungsfehler aufgetreten ist, durch einen korrigierten Wert durch: berechnen eines Rechenwertes für die Zustandsgröße, bei der ein Erfassungsfehler aufgetreten ist, durch Einsetzen der Werte für die anderen Zustandsgrößen in das mathematische Modell (9), und ersetzen des erfassten Wertes für die Zustandsgröße, bei der ein Erfassungsfehler aufgetreten ist, durch den berechneten Rechenwert für diese Zustandsgröße.

2. Verfahren (100) nach Anspruch 1, **dadurch gekennzeichnet, dass** die Zustandsgröße, bei der ein Erfassungsfehler aufgetreten ist, ermittelt (104) wird, indem die Überprüfung einer Zustandsgröße auf das Vorliegen eines Erfassungsfehlers solange mit wechselnden Zustandsgrößen durchgeführt wird, bis die Zustandsgröße gefunden ist, bei der ein Erfassungsfehler vorliegt.

3. Verfahren (100) nach Anspruch 2, **dadurch gekennzeichnet, dass** die Ermittlung (104) abgebrochen wird, wenn eine Zustandsgröße ermittelt werden konnte, bei der ein Erfassungsfehler aufgetreten ist, oder wenn alle Zustandsgrößen überprüft worden sind, ohne dass eine Zustandsgröße ermittelt werden konnte, bei der ein Erfassungsfehler aufgetreten ist.

4. Verfahren (100) nach Anspruch 3, **dadurch gekennzeichnet, dass** in dem Fall, dass keine Zustandsgröße ermittelt (104) werden konnte, bei der ein Erfassungsfehler aufgetreten ist, wenigstens einer der folgenden Schritte ausgeführt wird: signalisieren eines gravierenden Fehlers, versetzen des Absperrorgans in einen Sicherheitsmodus.

5. Verfahren (100) nach einem der Ansprüche 1 bis 4, **dadurch gekennzeichnet, dass** die Zustandsgrößen des Absperrorgans (1), zwischen denen eine physikalische Abhängigkeit besteht, der einströmseitige Mediumdruck ($p_1$), der ausströmseitige Mediumdruck ($p_3$) und eine Strömungsgeschwindigkeit (v) des Mediums im Strömungskanal sind.

6. Verfahren (100) nach einem der Ansprüche 1 bis 5, **dadurch gekennzeichnet, dass** das mathematische Modell (9) und die Verfahrensschritte mit der Steuer- und Auswerteeinheit (8) berechnet und durchgeführt werden oder dass das mathematische Modell (9) und die Verfahrensschritte auf einer Recheneinheit (15) außerhalb des Absperrorgans (1) berechnet und durchgeführt werden und die erfassten Werte der Zustandsgrößen über einen Kommunikationskanal von dem Absperrorgan (1) zu der externen Recheneinheit (15) übertragen werden.

7. Verfahren (100) nach einem der Ansprüche 1 bis 6, **gekennzeichnet, durch** überprüfen (103) der Konsistenz der Werte der Zustandsgrößen durch Einsetzen der Werte der Zustandsgrößen in das mathematische Modell (9), und bei Feststellung einer Inkonsistenz signalisieren (106) des Vorliegens eines Erfassungsfehlers bei den Zustandsgrößen.

8. Absperrorgan (1) für ein Fluid, mit einem das Fluid führenden Gehäuse (2), mit einer in dem Gehäuse (2) vorgesehenen Einströmöffnung (3a) für das Fluid und mit einer in dem Gehäuse (2) vorgesehenen Ausströmöffnung (3b) für das Fluid, mit einem in dem Gehäuse (2) zwischen der Einströmöffnung (3a) und der Ausströmöffnung (3b) ausgebildeten Strömungskanal (4) für das Fluid, mit einer in dem Strömungskanal (4) angeordneten Sperrvorrichtung (5) mit einem einstellbaren Strömungsquerschnitt für das Fluid in der Sperrvorrichtung (5) und damit im Strömungskanal (4) und mit einer Steuer- und Auswerteeinheit (8) zur Ansteuerung der Sperrvorrichtung (5) und zur Erfassung von Zustandsgrößen des Absperrorgans (1),
**dadurch gekennzeichnet,**

**dass** der Zusammenhang zwischen wenigstens zwei Zustandsgrößen des Absperrorgans (1), zwischen denen eine physikalische Abhängigkeit besteht, als mathematisches Modell (9) des Absperrorgans (1) beschrieben ist,
**dass** Werte für die Zustandsgrößen am Absperrorgan (1) erfasst werden,
**dass** die Steuer- und Auswerteeinheit (8) so ausgestaltet und eingerichtet ist, dass sie wenigstens einen der folgenden Verfahrensschritte ausführt:

- überprüfen (104) einer Zustandsgröße auf das Vorliegen eines Erfassungsfehlers beim Erfassen des Wertes der Zustandsgröße durch: berechnen eines Rechenwertes für die zu überprüfende Zustandsgröße durch Einsetzen der Werte für die anderen Zustandsgrößen in das mathematische Modell, berechnen von Rechenwerten für die anderen Zustandsgrößen durch Einsetzen des Rechenwertes für die zu überprüfende Zustandsgröße und der Werte der anderen Zustandsgrößen in das mathematische Modell (9), signalisieren (107) eines Erfassungsfehlers bei der überprüften Zustandsgröße, wenn der Rechenwert der zu überprüfenden Zustandsgröße von dem erfassten Wert der zu überprüfenden Zustandsgröße abweicht und die Rechenwerte der anderen Zustandsgrößen von den korrespondierenden erfassten Werten der anderen Zustandsgrößen nicht abweichen,
- ersetzen (105) des erfassten Wertes der Zustandsgröße, bei der ein Erfassungsfehler aufgetreten ist, durch einen korrigierten Wert durch: berechnen eines Rechenwertes für die Zustandsgröße, bei der ein Erfassungsfehler aufgetreten ist, durch Einsetzen der Werte für die anderen Zustandsgrößen in das mathematische Modell, und ersetzen des erfassten Wertes für die Zustandsgröße, bei der ein Erfassungsfehler aufgetreten ist, durch den berechneten Rechenwert für diese Zustandsgröße.

9. Absperrorgan (1) nach Anspruch 8, **dadurch gekennzeichnet, dass** die Steuer- und Auswerteeinheit (8) so ausgestaltet und eingerichtet ist, dass sie die Verfahrensschritte des Kennzeichnungsteils wenigstens eines Anspruchs der Ansprüche 2 bis 7 durchführen kann.

10. Absperrorgan (1) nach einem der Ansprüche 8 oder 9, **dadurch gekennzeichnet, dass** mit einem Drucksensor (11) der einströmseitige Mediumdruck ($p_1$) und mit einem Drucksensor (12) der ausströmseitige Mediumdruck ($p_3$) erfasst wird, und dass eine Strömungsgeschwindigkeit (v) des Mediums im Strömungskanal (4) mit einem Strömungssensor (13) erfasst wird, insbesondere mit einem Strömungssensor (13) auf Basis von Ultraschallwellen.

## Claims

1. Computer-implemented method (100) for operating a shut-off device (1) for a fluid, with a housing (2) conducting the fluid, with an inflow opening (3a) for the fluid, which opening is provided in the housing (2) and with an outflow opening (3b) for the fluid, which opening is provided in the housing (2), with a flow channel (4) formed in the housing (2) for the fluid between the inflow opening (3a) and the outflow opening (3b), and with a blocking device (5) arranged in the flow channel (4) with an adjustable flow cross-section for the fluid in the blocking device (5) and thus in the flow channel (4) and with a control and evaluation unit (8) for activating the blocking device (5) and for detecting state variables of the shut-off device (1),

   **characterized in**

   **that** the relationship between at least two state variables of the shut-off device (1), between which there is a physical dependency, is described as a mathematical model (9) of the shut-off device (1),
   **that** values for the state variables are detected at the shut-off device (1),
   **that** at least one of the following method steps is carried out:

   - checking (104) a state variable for the presence of a detection error when detecting the value of the state variable: calculating a calculation value for the state variable to be checked by inserting the values for the other state variables into the mathematical model (9), calculating calculation values for the other state variables by inserting the calculation value for the state variable to be checked and the values of the other state variables into the mathematical model, signaling (107) a detection error in the checked state variable if the calculated value of the state variable to be checked differs from the detected value of the state variable to be checked and the calculated values of the other state variables do not differ from the corresponding detected values of the other state variables,
   - replacing (105) the detected value of the state variable for which a detection error has occurred by a corrected value by: calculating a calculation value for the state variable for which a detection error has occurred by inserting the values for the other state variables into the mathematical model (9), and replacing the detected value for the state variable for which a detection error has occurred by the calculated calculation value for that state variable.

2. Method (100) according to claim 1, **characterized in that** the state variable at which a detection error has occurred is determined (104) by checking a state variable for the presence of a detection error with changing state variables until the state variable at which a detection error is present is found.

3. Method (100) according to claim 2, **characterized in that** the determination (104) is interrupted if a state variable in which a detection error has occurred could be determined, or if all state variables have been checked without it being possible to determine a state variable in which a detection error has occurred.

4. Method (100) according to claim 3, **characterized in that** in the event that no state variable could be determined (104) in which a detection error has occurred, at least one of the following steps is carried out: signaling a serious error, setting the shut-off device to a safety mode.

5. Method (100) according to any one of claims 1 to 4, **characterized in that** the state variables of the shut-off device (1), between which there is a physical dependence, are the medium pressure ($p_1$) on the inflow side, the medium pressure ($p_2$) on the outflow side and a flow velocity (v) of the medium in the flow channel.

6. Method (100) according to one of claims 1 to 5, **characterized in that** the mathematical model (9) and the method steps are calculated and carried out with the control and evaluation unit (8) or that the mathematical model (9) and the method steps are calculated and carried out on a computing unit (15) outside the shut-off device (1) and the detected values of the state variables are transmitted via a communication channel from the shut-off device (1) to the external computing unit (15).

7. Method (100) according to any one of claims 1 to 6, **characterized by** checking (103) the consistency of the values of the state variables by inserting the values of the state variables into the mathematical model (9), and if an inconsistency is detected, signaling (106) the presence of a detection error in the state variables.

8. Shut-off device (1) for a fluid, with a housing (2) conducting the fluid, with an inflow opening (3a) for the fluid, which opening is provided in the housing (2) and with an outflow opening (3b) for the fluid, which opening is provided in the housing (2), with a flow channel (4) formed in the housing (2) for the fluid between the inflow opening (3a) and the outflow opening (3b), and with a blocking device (5) arranged in the flow channel (4) with an adjustable flow cross-section for the fluid in the blocking device (5) and thus in the flow channel (4) and with a control and evaluation unit (8) for activating the blocking device (5) and for detecting state variables of the shut-off device (1),
**characterized in**

>   **that** the relationship between at least two state variables of the shut-off device (1), between which there is a physical dependency, is described as a mathematical model (9) of the shut-off device (1),
>   **that** values for the state variables are detected at the shut-off device (1),
>   **that** the control and evaluation unit (8) is designed and arranged such that it carries out at least one of the following method steps:
>
>>   - checking (104) a state variable for the presence of a detection error when detecting the value of the state variable: calculating a calculation value for the state variable to be checked by inserting the values for the other state variables into the mathematical model (9), calculating calculation values for the other state variables by inserting the calculation value for the state variable to be checked and the values of the other state variables into the mathematical model (9), signaling (107) a detection error in the checked state variable if the calculated value of the state variable to be checked differs from the detected value of the state variable to be checked and the calculated values of the other state variables do not differ from the corresponding detected values of the other state variables,
>>   - replacing (105) the detected value of the state variable for which a detection error has occurred by a corrected value by: calculating a calculation value for the state variable for which a detection error has occurred by inserting the values for the other state variables into the mathematical model (9), and replacing the detected value for the state variable for which a detection error has occurred by the calculated calculation value for that state variable.

9. Shut-off device (1) according to claim 8, **characterized in that** the control and evaluation unit (8) is designed and arranged such that it can carry out the method steps of the characterizing portion of at least one of claims 2 to 7.

10. Shut-off device (1) according to any one of claims 8 or 9, **characterized in that** the medium pressure ($p_1$) on the inflow side is detected by a pressure sensor (11) and the medium pressure ($p_3$) on the outflow side is detected by a pressure sensor (12), and that a flow velocity (v) of the medium in the flow channel (4) is detected by a flow sensor (13), in particular by a flow sensor (13) based on ultrasonic waves.

**Revendications**

1. Procédé informatisé (100) de fonctionnement d'un élément d'arrêt (1) destiné à un fluide, comprenant un boîtier (2) de guidage du fluide, une ouverture d'entrée (3a) ménagée dans le boîtier (2) et destinée au fluide et une ouverture de sortie (3b) ménagée dans le boîtier (2) et destinée au fluide, un conduit d'écoulement (4) destiné au fluide et ménagé dans le boîtier (2) entre l'ouverture d'entrée (3a) et l'ouverture de sortie (3b), un dispositif de blocage (5) disposé dans le conduit d'écoulement (4) et ayant une section d'écoulement réglable destiné au fluide situé dans le dispositif de blocage (5) et donc dans le conduit d'écoulement (4) et une unité de commande et d'évaluation (8) destinée à commander le dispositif de blocage (5) et à détecter des grandeurs d'état du dispositif d'arrêt (1),
**caractérisé en ce que**

>   la relation entre au moins deux grandeurs d'état de l'élément d'arrêt (1), entre lesquelles il existe une dépendance physique, est décrite comme un modèle mathématique (9) de l'élément d'arrêt (1),

des valeurs des grandeurs d'état sont acquises au niveau de l'élément d'arrêt (1),
au moins une des étapes de procédé suivantes est réalisée :

- vérifier (104) une grandeur d'état quant à la présence d'une erreur d'acquisition lors de l'acquisition de la valeur de la grandeur d'état via les opérations suivantes : calculer une valeur de calcul pour la grandeur d'état à vérifier par introduction des valeurs des autres grandeurs d'état dans le modèle mathématique (9), calculer des valeurs de calcul pour les autres grandeurs d'état par introduction de la valeur de calcul de la grandeur d'état à vérifier et des valeurs des autres grandeurs d'état dans le modèle mathématique (107), signaler une erreur d'acquisition pour la grandeur d'état vérifiée si la valeur de calcul de la grandeur d'état à vérifier s'écarte de la valeur acquise de la grandeur d'état à vérifier et si les valeurs de calcul des autres grandeurs d'état ne s'écartent pas des valeurs acquises correspondantes des autres grandeurs d'état,
- remplacer (105) la valeur acquise de la grandeur d'état, pour laquelle une erreur d'acquisition s'est produite, par une valeur corrigée via les opérations suivantes : calculer une valeur de calcul de la grandeur d'état, pour laquelle une erreur d'acquisition s'est produite, par introduction des valeurs des autres grandeurs d'état dans le modèle mathématique (9), et remplacer la valeur acquise de la grandeur d'état, pour laquelle une erreur d'acquisition s'est produite, par la valeur de calcul calculée pour cette grandeur d'état.

2. Procédé (100) selon la revendication 1, **caractérisé en ce que** la grandeur d'état, pour laquelle une erreur d'acquisition s'est produite, est déterminée (104) par vérification d'une grandeur d'état quant à la présence d'une erreur d'acquisition avec des grandeurs d'état changeantes jusqu'à trouver la grandeur d'état pour laquelle il y a une erreur d'acquisition.

3. Procédé (100) selon la revendication 2, **caractérisé en ce que** la détermination (104) est interrompue si une grandeur d'état a pu être déterminée pour laquelle une erreur d'acquisition s'est produite, ou si toutes les grandeurs d'état ont été vérifiées sans qu'une grandeur d'état ait pu être déterminée pour laquelle une erreur d'acquisition s'est produite.

4. Procédé (100) selon la revendication 3, **caractérisé en ce que** dans le cas où aucune grandeur d'état (104) pour laquelle une erreur d'acquisition s'est produite n'a pu être déterminée, au moins une des étapes suivantes est réalisée : signaler une erreur grave, faire passer l'élément d'arrêt en mode sécurité.

5. Procédé (100) selon l'une des revendications 1 à 4, **caractérisé en ce que** les grandeurs d'état de l'élément de blocage (1), entre lesquelles il existe une dépendance physique, la pression de milieu côté entrée ($p_1$), sont la pression de milieu côté sortie ($p_3$) et la vitesse d'écoulement (v) du milieu dans le conduit d'écoulement.

6. Procédé (100) selon l'une des revendications 1 à 5, **caractérisé en ce que** le modèle mathématique (9) et les étapes de procédé sont calculés et réalisés avec l'unité de commande et d'évaluation (8) ou **en ce que** le modèle mathématique (9) et les étapes de procédé sont calculés et réaliés sur une unité de calcul (15) située à l'extérieur de l'élément d'arrêt (1) et les valeurs acquises des grandeurs d'état sont transmises par le biais d'un canal de communication de l'élément d'arrêt (1) à l'unité de calcul extérieure (15).

7. Procédé (100) selon l'une des revendications 1 à 6, **caractérisé par** les opérations suivantes : vérifier (103) la cohérence des valeurs des grandeurs d'état par introduction des valeurs des grandeurs d'état dans le modèle mathématique (9), et signaler (106), lors de la détection d'une incohérence, la présence d'une erreur d'acquisition dans les grandeurs d'état.

8. Élément de blocage (1) destiné à un fluide, comprenant un boîtier (2) de guidage du fluide, une ouverture d'entrée (3a) destinée au fluide et ménagée dans le boîtier (2) et une ouverture de sortie (3b) destinée au fluide et ménagée dans le boîtier (2), un conduit d'écoulement (4) destiné au fluide et ménagé dans le boîtier (2) entre l'ouverture d'entrée (3a) et l'ouverture de sortie (3b), un dispositif de blocage (5) disposé dans le conduit d'écoulement (4) et ayant une section d'écoulement réglable destinée au fluide situé dans le dispositif de blocage (5) et donc dans le conduit d'écoulement (4) et une unité de commande et d'évaluation (8) detinée à commander le dispositif de blocage (5) et à acquérir des grandeurs d'état de l'élément d'arrêt (1),
**caractérisé en ce que**

la relation entre au moins deux grandeurs d'état de l'élément d'arrêt (1), entre lesquelles il existe une dépendance physique, est décrite comme un modèle mathématique (9) de l'élément d'arrêt (1),
des valeurs des grandeurs d'état sont acquises au niveau de l'élément d'arrêt (1),

l'unité de commande et d'évaluation (8) est conçue et adapté pour réaliser au moins une des étapes de procédé suivantes :

- vérifier (104) une grandeur d'état quant à la présence d'une erreur d'acquisition lors de l'acquisition de la valeur de la grandeur d'état via les opérations suivantes : calculer une valeur de calcul pour la grandeur d'état à vérifier par introduction des valeurs des autres grandeurs d'état dans le modèle mathématique (9), calculer des valeurs de calcul pour les autres grandeurs d'état par introduction de la valeur de calcul de la grandeur d'état à vérifier et des valeurs des autres grandeurs d'état dans le modèle mathématique (107), signaler une erreur d'acquisition pour la grandeur d'état vérifiée si la valeur de calcul de la grandeur d'état à vérifier s'écarte de la valeur acquise de la grandeur d'état à vérifier et si les valeurs de calcul des autres grandeurs d'état ne s'écartent pas des valeurs acquises correspondantes des autres grandeurs d'état,
- remplacer (105) la valeur acquise de la grandeur d'état, pour laquelle une erreur d'acquisition s'est produite, par une valeur corrigée via les opérations suivantes : calculer une valeur de calcul de la grandeur d'état, pour laquelle une erreur d'acquisition s'est produite, par introduction des valeurs des autres grandeurs d'état dans le modèle mathématique, et remplacer la valeur acquise de la grandeur d'état, pour laquelle une erreur d'acquisition s'est produite, par la valeur de calcul calculée pour cette grandeur d'état.

9. Élément d'arrêt (1) selon la revendication 8, **caractérisé en ce que** l'unité de commande et d'évaluation (8) est conçue et adaptée pour pouvoir réaliser les étapes de procédé de la partie caractérisante d'au moins une revendication des revendications 2 à 7.

10. Élément d'arrêt (1) selon l'une des revendications 8 ou 9, **caractérisé en ce que** la pression de milieu côté entrée ($p_1$) est acquise à l'aide d'un capteur de pression (11) et la pression de milieu côté sortie ($p_2$) est acquise à l'aide d'un capteur de pression (12) et **en ce qu'**une vitesse d'écoulement (v) du milieu situé dans le conduit d'écoulement (4) est acquise à l'aide d'un capteur d'écoulement (13), en particulier d'un capteur d'écoulement (13) basé sur des ondes ultrasonores.

Fig. 1

Fig. 2

100

<u>9</u>                                                    101

$$0 = m(x_1, \ldots, x_n)$$

$x_1, \ldots, x_n$                                         102

$x_{1,m}$        $x_{n,m}$

                                                           103

$$0 \overset{?}{=} m(x_{1,m}, \ldots, x_{n,m})$$          — 9

                                                           106

fail!

Fig. 3

100

$$\underline{9}$$
$$0 = m(x_1, \ldots, x_n) \quad 101$$

$$x_1, \ldots, x_n \quad 102$$
$$\downarrow \qquad \downarrow$$
$$x_{1,m} \qquad x_{n,m}$$

104

$$x_{i,c} \leftarrow m(x_{1,m}, \ldots, x_{i-1,m}, x_{i+1,m}, \ldots, x_{n,m}) = 0$$

$$x_{i,c} \stackrel{?}{\neq} x_{i,m}$$

$$\downarrow \quad \checkmark$$

$$\forall_{j \neq i} \quad x_{j,c} \leftarrow m(x_{1,m}, \ldots, x_{i,c}, \ldots, x_{n,m}) = 0$$

$$x_{j,c} \stackrel{?}{=} x_{j,m}$$

$$\checkmark$$

$$x_{i,m} \ \text{fail} \quad 107$$

# Fig. 4

100

$\underline{9}$ 101

$0 = m(x_1, ..., x_n)$

$x_1, ..., x_n$ 102

$x_{1,m}$ $x_{n,m}$

105

$x_{i,m} \overset{?}{=} \text{fail}$

$\checkmark$

$x_{i,c} \leftarrow m(x_{1,m}, ..., x_{i-1,m}, x_{i+1,m}, ..., x_{n,m}) = 0$

$x_{i,m} = x_{i,c}$

# Fig. 5

**IN DER BESCHREIBUNG AUFGEFÜHRTE DOKUMENTE**

**In der Beschreibung aufgeführte Patentdokumente**

- EP 3117137 A1
- US 20080221822 A1